# FASCICULE DE BREVET EUROPEEN

(11) **EP 0 640 274 B1**
(45) Date de publication et mention de la délivrance du brevet: **03.12.1997**
(21) Numéro de dépôt: 94440053.0
(22) Date de dépôt: 31.08.1994
(51) Int. Cl.: A01C 5/06, A01C 7/08, A01B 49/06

(54) **Semoir pneumatique et machine agricole combinée de travail du sol et de semis utilisant un tel semoir**
Pneumatischer Sämaschine und kombinierte Landmaschine zur Bodenbearbeitung und zum Säen mit einer solchen pneumatischen Sämaschine
Pneumatic seeder and combined agricultural machine for working the soil and sowing with such a pneumatic seeder

(30) Priorité: 31.08.1993 FR 9310489
(43) Date de publication de la demande: 01.03.1995
(73) Titulaire: KUHN S.A., F-67700 Saverne (FR)
(72) Inventeur: Klein, Jean, F-67330 Dossenheim sur Zinsel (FR); Oberle, Edmond, F-67700 Haegen (FR)

(56) Documents cités:
- EP-A- 0 080 912
- EP-A- 0 311 833
- EP-A- 0 402 290
- US-A- 4 669 922

## Description

La présente invention concerne un semoir pneumatique comportant au moins un soc de semis muni de trois orifices : un orifice d'entrée par lequel arrive le flux d'air transportant les graines, un premier orifice de sortie par lequel les graines sont implantées dans le sol et un deuxième orifice de sortie.

Il est connu dans l'état de la technique (EP-A-0 080 912) un semoir pneumatique muni d'une pluralité de socs de semis. Chaque soc de semis de ce semoir pneumatique présente la particularité de séparer les graines de la majeure partie du flux d'air. Pour ce faire, chaque soc de semis comporte une partie conique surmontée d'une partie cylindrique. Ces deux parties s'étendent vers le bas et vers l'arrière, compte tenu du sens d'avance au travail, et reçoivent le flux d'air et de graines au travers d'un orifice d'entrée. Chaque soc de semis comporte, par ailleurs, un sabot qui trace dans le sol un sillon destiné à recevoir lesdites graines. Le flux d'air et de graines arrivant au travers de l'orifice d'entrée est dirigé de sorte à ce que les graines tombent dans le sillon tracé par le sabot au travers d'un premier orifice de sortie situé à l'extrémité inférieure de la partie conique et de manière à ce que la majeure partie du flux d'air s'échappe du soc de semis par un deuxième orifice de sortie prévu à l'extrémité supérieure de la partie cylindrique dudit soc de semis. Ce deuxième orifice de sortie s'étend nettement au-dessus de l'orifice d'entrée.

En pratique, il peut arriver que des résidus ou de la terre humide bouchent malencontreusement le premier orifice de sortie d'un soc de semis. Dès lors, les graines ne peuvent plus être implantées dans le sol, mais s'accumulent dans le soc de semis, puis dans la conduite d'alimentation dudit soc de semis. Tant que l'utilisateur n'aura pas remarqué l'accumulation de graines dans la conduite d'alimentation et débouché ladite conduite d'alimentation, la bande de terre travaillée ne sera plus correctement ensemencée.

Le but de la présente invention est de remédier à cet inconvénient.

A cet effet, le semoir pneumatique selon la présente invention est caractérisé en ce que le bouchage du premier orifice de sortie entraîne la sortie des graines par ledit deuxième orifice de sortie.

Grâce à cette caractéristique, les graines peuvent sortir du soc de semis même lorsque le premier orifice de sortie s'est malencontreusement bouché.

Il peut d'ailleurs être avantageusement prévu que le flux d'air et de graines s'écoule essentiellement vers l'arrière, compte tenu du sens d'avance au travail, lorsque le premier orifice de sortie se bouche. On comprendra qu'un tel agencement favorise la sortie des graines par le deuxième orifice de sortie.

Afin de conserver globalement l'alignement des graines, il peut également être prévu que les graines sortant du soc de semis par le deuxième orifice de sortie tombent au moins sensiblement dans le voisinage du sillon tracé par le soc de semis dans le sol.

Dans une réalisation préférée, il est prévu qu'en face de l'orifice d'entrée soit implanté un déflecteur destiné à diriger le flux d'air et de graines vers le bas en direction du premier orifice de sortie et que le deuxième orifice de sortie qui débouche à l'arrière compte tenu du sens d'avance au travail, s'étende juste au-dessus du déflecteur et légèrement plus haut que l'orifice d'entrée.

Avantageusement, ce déflecteur s'étendra vers l'arrière et vers le bas.

Selon une autre caractéristique supplémentaire de l'invention, il peut être prévu que le soc de semis comporte un corps comprenant deux parois latérales s'étendant vers l'arrière.

Dans le cas où le soc de semis comporte un déflecteur, celui-ci sera avantageusement implanté entre les deux parois latérales du corps dudit soc de semis.

Il peut également être prévu qu'une conduite d'alimentation soit liée à l'orifice d'entrée du soc de semis et que lesdites parois latérales soient éloignées l'une de l'autre d'une distance moyenne avoisinant le diamètre moyen de la conduite d'alimentation ou inférieure audit diamètre moyen. De ce fait, le volume intérieur du soc de semis sera relativement faible. En conséquence, si des résidus ou de la terre humide bouchaient le premier orifice de sortie, les graines pourraient rapidement sortir par le deuxième orifice de sortie.

Une réalisation très intéressante est obtenue lorsque le deuxième orifice de sortie s'étend légèrement au-dessus du prolongement de ladite conduite d'alimentation. Ainsi, en s'accumulant dans le soc de semis, les graines annuleront rapidement l'action du déflecteur pour s'écouler ensuite par le deuxième orifice de sortie.

Selon une autre caractéristique supplémentaire de l'invention, il peut être prévu que le soc de semis comporte un sabot servant à tracer un sillon dans le sol durant le travail.

Selon une autre caractéristique supplémentaire de l'invention, le deuxième orifice de sortie peut comporter un organe de guidage dirigeant le flux d'air et de graines vers le bas et juste derrière le soc de semis. De cette sorte, les graines seront mieux dirigées vers le sillon.

Selon une autre caractéristique supplémentaire de l'invention, il peut également être prévu que le soc de semis comporte en sus un troisième orifice de sortie permettant à une partie du flux d'air de s'échapper dudit soc de semis lorsque le premier orifice de sortie est obstrué.

Ce troisième orifice de sortie pourra être implanté au-dessus de l'orifice d'entrée et s'étendre vers l'avant compte tenu du sens d'avance au travail du semoir.

L'invention concerne également une machine agricole combinée de travail du sol et de semis comportant une machine de préparation d'un lit de semence et un semoir pneumatique tel que décrit ci-dessus.

D'autres caractéristiques de l'invention apparaissent dans la description suivante d'un exemple non limitatif de réalisation faite en référence au dessin annexé sur lequel :
- la figure 1 représente une vue latérale d'une machine combinée de travail du sol et de semis attelée à un véhicule moteur et comportant un semoir selon l'invention ;
- la figure 2 représente une coupe, suivant le plan vertical médian dirigé suivant la direction de travail, d'un soc de semis de la machine selon l'invention lorsque les graines sortent du soc de semis par le premier orifice de sortie ;
- la figure 3 représente le soc de semis de la figure 2 lorsque les graines sortent du soc de semis par le deuxième orifice de sortie ; et
- la figure 4 représente une vue en perspective du corps d'un soc de semis de la machine selon l'invention.

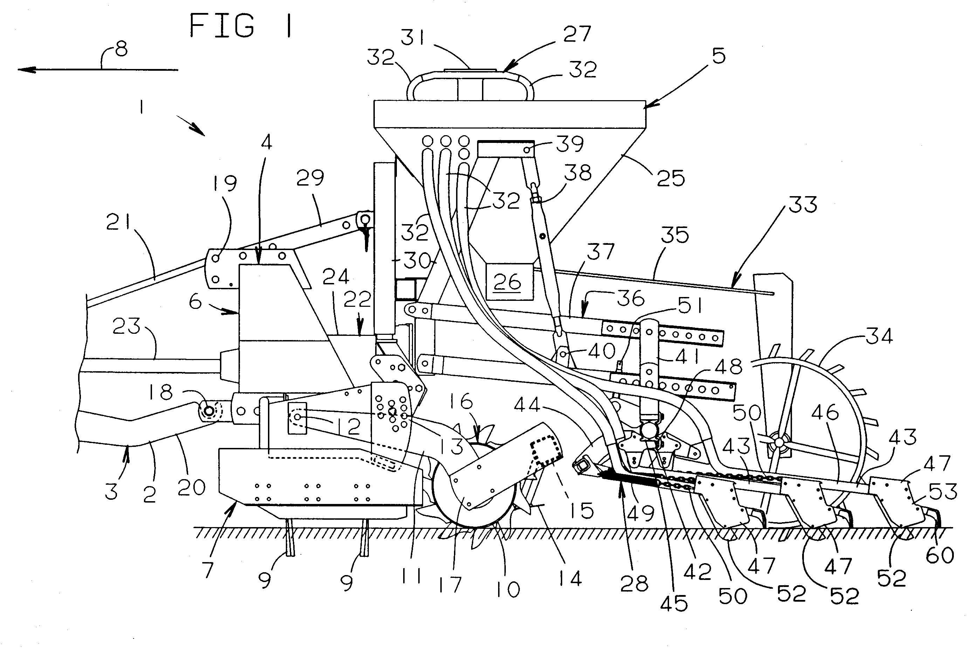

Sur les figures 1 à 4 apparaît une machine agricole combinée de travail du sol et de semis (1) liée à l'attelage arrière (2) d'un tracteur agricole (3). Celle-ci comprend une machine de préparation d'un lit de semence (4) et un semoir (5).

La machine de préparation du lit de semence (4) comporte un châssis (6) supportant une poutre support (7) qui s'étend transversalement à la direction de travail (8). Sous la poutre support (7) s'étendent des outils de travail du sol (9) liés à des rotors (non représentés) qui sont guidés en rotation dans la poutre support (7), de sorte à pouvoir tourner autour d'axes respectifs dirigés vers le haut.

La machine de préparation du lit de semence (4) est également équipée d'un rouleau de rappuyage (10) implanté derrière lesdits rotors (non représentés) de sorte que son axe de rotation s'étende au moins sensiblement orthogonalement à la direction de travail (8). Ce rouleau de rappuyage (10), du type "Packer" dans l'exemple représenté, est guidé en rotation entre les extrémités arrière de deux bras (11) liés chacun à son extrémité avant à la poutre support (7) au moyen d'une articulation (12) d'axe s'étendant au moins sensiblement parallèlement à l'axe de rotation du rouleau de rappuyage (10). Entre chacun de ces bras (11) et la poutre support (7) est prévu un dispositif de réglage (13) de la profondeur de travail des outils de travail du sol (9). Grâce à ces deux dispositifs de réglage (13) de la profondeur de travail, il est possible de régler la position en hauteur du rouleau de rappuyage (10) par rapport à la poutre support (7). Au travail, le rouleau de rappuyage (10) roule en s'appuyant sur le sol et détermine ainsi la profondeur de travail des outils de travail du sol (9). En sus, le rouleau de rappuyage (10) participe au travail du sol.

Au travail, les dispositifs de réglage (13) de la profondeur de travail limitent le déplacement de ladite poutre support (7) par rapport au rouleau de rappuyage (10) uniquement vers le bas. Grâce à cette caractéristique, la poutre support (7) de la machine de préparation du lit de semence (4) peut se déplacer provisoirement vers le haut lorsque les outils de travail du sol (9) rencontrent un obstacle enfoui dans le sol alors que le rouleau de rappuyage (10) continue à rouler sur le sol.

Le nettoyage du rouleau de rappuyage (10) est réalisé à l'aide d'une pluralité d'outils de nettoyage (14) fixés à un longeron support (15). Ce longeron support (15) s'étend au moins sensiblement parallèlement au rouleau de rappuyage (10) et dans le voisinage arrière de sa partie supérieure (16). A chacune de ses extrémités longitudinales, le longeron support (15) est lié rigidement aux bras (11) dudit rouleau de rappuyage (10) au moyen d'une paroi latérale (17) correspondante. Celle-ci est fixée au bras (11) dans le voisinage de l'axe de rotation du rouleau de rappuyage (10) et assure un positionnement précis des outils de nettoyage (14) par rapport audit rouleau de rappuyage (10).

Le châssis (6) comporte deux points d'attelage inférieurs (18) et un point d'attelage supérieur (19) prévus pour l'accouplement de la machine agricole combinée de travail du sol et de semis (1) à l'attelage trois points arrière (2) du tracteur agricole (3) (sur la figure 1, on n'a représenté que les barres (20, 21) dudit attelage (2)).

L'entraînement en rotation des outils de travail du sol (9) est réalisé par des moyens d'entraînement (22) recevant eux-mêmes le mouvement de l'arbre de prise de force (non représenté) du tracteur agricole (3) au moyen d'un arbre de transmission à joints universels (23). Ces moyens d'entraînement (22) sont connus de l'homme de l'art et comportent notamment un carter central de renvoi (24) qui pourra avantageusement être réalisé sous forme de boîte de vitesses. Il comporte d'une part un arbre de sortie (non représenté) pénétrant dans la poutre support (7) pour entraîner de manière connue les rotors (non représentés) et les outils de travail du sol (9) équipant ces derniers, et d'autre part un arbre de sortie arrière (non représenté) servant à entraîner le semoir (5) via des moyens d'entraînement non représentés mais également connus de l'homme de l'art.

Le semoir (5), quant à lui, comporte une trémie (25) dans laquelle se trouve les graines à implanter dans le lit de semence préparé par la machine de préparation du lit de semence (4). A la base de la trémie (25) est prévu un dispositif (26) de dosage des graines à la sortie duquel les graines sont transportées par un dispositif (27) de distribution et de véhiculage, jusqu'à un dispositif (28) d'implantation des graines dans le sol, qui sera décrit ci-après plus en détail.

Dans l'exemple représenté, le semoir (5) est porté par la machine de préparation du lit de semence (4). A cet effet, le châssis (6) de celle-ci est doté d'une structure d'attelage (29) à laquelle est attelé le semoir (5) de sorte que le châssis (30) du semoir (5) soit fixé au châssis (6) de la machine de préparation du lit de semence (4).

Ce semoir (5) est un semoir pneumatique. A cet effet, son dispositif (27) de distribution et de véhiculage comporte notamment une turbine (non représentée), une tête de distribution (31) et des tuyaux (32). La turbine crée le courant d'air qui véhicule les graines jusqu'à leur implantation dans le sol. L'entraînement en rotation de la turbine est réalisé à partir des moyens d'entraînement évoqués ci-dessus.

Le système d'entraînement (33) du dispositif (26) de dosage est constitué d'une roue (34) roulant sur le sol et d'organes de transmission (35) transmettant le mouvement de rotation de la roue (34) au dispositif (26) de dosage.

Sur la figure 1, il apparaît aussi que le dispositif d'implantation (28) est lié au châssis (30) du semoir (5) au moyen d'une structure de liaison (36). Celle-ci comporte deux parallélogrammes (37) déformables dans un plan au moins sensiblement vertical (en fait, sur la figure 1, ces deux parallélogrammes (37) se superposent de sorte qu'on n'en voit qu'un seul). Ladite structure de liaison (36) comporte également un tirant (38) de longueur réglable implanté entre chaque parallélogramme (37) et le châssis (30). Chaque tirant (38) est lié d'une part au châssis (30) au moyen d'une articulation (39) et d'autre part au parallélogramme respectif (37) au moyen d'une articulation (40). Grâce à ces deux tirants (38), il est possible de déplacer en hauteur le dispositif d'implantation (28) par rapport au châssis (6) de la machine de préparation du lit de semence (4) afin d'adapter la position dudit dispositif d'implantation (28) à la profondeur de travail de la machine de préparation du lit de semence (4). Les deux tirants (38) tiennent également le dispositif d'implantation (28) au cours du transport.

Le dispositif d'implantation (28) peut aussi être approché ou éloigné du châssis (30) du semoir (5) suivant la direction de travail (8). A cet effet, chaque parallélogramme déformable (37) comporte un côté (41) déplaçable par rapport au reste du parallélogramme (37) suivant la direction d'avance (8) au travail et fixé au dispositif d'implantation (28). Ceci permet d'amener le dispositif d'implantation (28) dans le proche voisinage du rouleau de rappuyage (10) quelle que soit la machine de préparation du lit de semence (4) utilisée. En effet, selon la machine de préparation du lit de semence (4) utilisée, le rouleau de rappuyage (10) peut s'étendre plus ou moins près du châssis (6) de celle-ci.

Le dispositif d'implantation (28) équipant le semoir (5) se compose dans les grandes lignes d'une structure porteuse (42), d'une triple rangée de conduites (43) de guidage et d'implantation des graines dans le sol et d'un dispositif de terrage (44).

La structure porteuse (42) comporte une traverse (45) dont l'axe longitudinal s'étend au moins sensiblement horizontalement et orthogonalement à la direction de travail (8). Cette traverse (45) est liée à l'extrémité inférieure de chaque côté (41) de la structure de liaison (36) et porte la triple rangée de conduites (43) de guidage et d'implantation des graines dans le sol.

Chaque conduite (43) de guidage et d'implantation des graines dans le sol comporte une conduite d'alimentation (46) et un soc de semis (47). Dans le voisinage de son extrémité frontale la conduite d'alimentation (46) est articulée à deux mâchoires (48) fixées de manière réglable latéralement à la partie inférieure de la traverse (45). De cette sorte, ladite conduite d'alimentation (46) peut pivoter par rapport à la traverse (45) pour notamment se dégager du sol en cas de rencontre d'un obstacle. Ce pivotement se fait à l'encontre d'un ressort (49) qui est, dans l'exemple représenté, un ressort de traction. Chaque ressort (49) est lié d'une part à la conduite d'alimentation (46) correspondante au moyen d'une chaînette (50) respective et d'autre part à la traverse (45) via un dispositif (51) de réglage centralisé de la tension des ressorts (49). Les ressorts (49), les chaînettes (50) et le dispositif (51) de réglage centralisé de la tension des ressorts (49) composent le dispositif de terrage (44). Ce dernier fonctionne de la manière suivante. Pour régler la force de rappel exercée par chaque ressort (49) sur la conduite d'alimentation (46) respective, il suffira d'accrocher la chaînette (50) à un autre maillon et pour moduler la force de rappel exercée par l'ensemble des ressorts (49) sur les conduites d'alimentation (46) correspondantes, il est prévu d'agir simultanément sur tous les ressorts (49) à l'aide du dispositif de réglage centralisé (51). De ce fait, l'effort servant à faire pénétrer chaque soc de semis (47) dans le sol peut être aisément réglé.

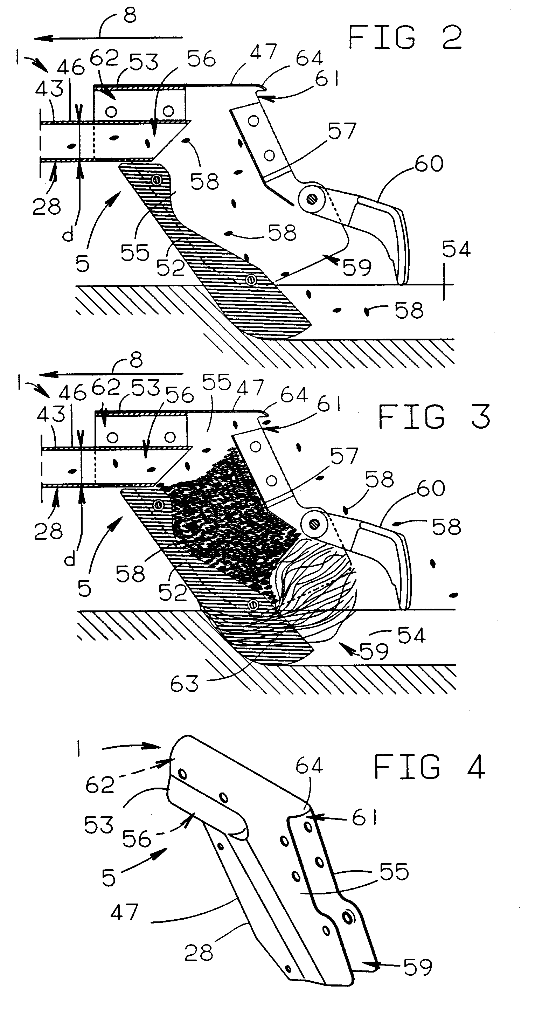

Chaque soc de semis (47) comporte un sabot (52) et un corps (53). Le sabot (52) est fixé à l'avant du corps (53) et s'étend vers l'arrière et vers le bas de sorte à tracer un sillon (54) dans le sol au travail (figures 2 et 3). Le corps (53), quant à lui, comporte deux parois latérales (55) implantées juste derrière le sabot (52) et dirigées vers l'arrière. Les parois latérales (55) sont éloignées l'une de l'autre d'une distance moyenne avoisinant le diamètre moyen (d) de la conduite d'alimentation (46). Le volume intérieur du soc de semis (47) est de ce fait relativement faible. La conduite d'alimentation (46) débouche entre les deux parois latérales (55) juste au-dessus du sabot (52). Dans le prolongement de l'extrémité arrière de la conduite d'alimentation (46), c'est-à-dire en face de l'orifice d'entrée (56) du soc de semis (47), est implanté un déflecteur (57) permettant de diriger le flux d'air et de graines (58) vers le bas. A cet effet, le déflecteur (57) est implanté entre les parois latérales (55) du corps (53) et s'étend vers l'arrière et vers le bas de sorte à guider le flux d'air et de graines (58) jusqu'à un premier orifice de sortie (59) du soc de semis (47). Ce premier orifice de sortie (59) débouche directement dans le sillon (54) tracé par le sabot (52). Le soc de semis (47) comporte également un clapet pivotant (60) évitant en principe le bouchage du premier orifice de sortie (59) par de la terre lors d'une marche arrière accidentelle du tracteur (3). En effet, lors d'une telle manoeuvre, le clapet pivotant (60) doit refermer le premier orifice de sortie (59).

Comme visible sur les figures 2 à 4, le soc de semis (47) comporte encore un deuxième orifice de sortie (61) et un troisième orifice de sortie (62). Le deuxième orifice de sortie (61) s'étend juste au-dessus du déflecteur (57) et débouche du soc de semis (47) vers l'arrière compte tenu du sens d'avance au travail (8).

Le deuxième orifice de sortie (61) est implanté de telle sorte que le bouchage accidentel du premier orifice (59) entraîne la sortie durable des graines (58) par ledit deuxième orifice de sortie (61). En effet, si des résidus ou de la terre humide (63) arrivent accidentellement à boucher le premier orifice de sortie (59) du soc de semis (47), les graines (58) commencent à s'accumuler dans le soc de semis (47). Toutefois, étant donné que le volume intérieur du soc de semis (47) est relativement faible, le niveau des graines (58) dans le soc de semis (47) atteint rapidement l'orifice d'entrée (56). Dès lors, l'action du déflecteur (57) est annulée et le flux d'air et de graines (58) s'écoule vers l'arrière au travers du deuxième orifice de sortie (61) qui est implanté légèrement plus haut que l'orifice d'entrée (56). Etant donné que le deuxième orifice de sortie (61) débouche du soc de semis (47) vers l'arrière, les graines (58) tombent au moins dans le voisinage du sillon (54). De plus, le deuxième orifice de sortie (61) comporte un organe de guidage (64) dirigeant le flux d'air et de graines (58) vers le bas et juste derrière le soc de semis (47). De ce fait, les graines (58) sont mieux dirigées vers le sillon (54).

Le troisième orifice de sortie (62), quant à lui, permet l'évacuation d'une partie du flux d'air lorsque le premier orifice de sortie (59) est obstrué. Un tel agencement peut être intéressant notamment lorsque le deuxième orifice de sortie (61) est plus petit que l'orifice d'entrée (56). Dans l'exemple ci-représenté, le troisième orifice de sortie (62) est implanté au-dessus de l'orifice d'entrée (56) et s'étend vers l'avant.

Du reste, la présente machine agricole combinée de travail du sol et de semis (1) comporte une herse de recouvrement (non représentée mais connue de l'homme de l'art). Celle-ci s'étend derrière les socs de semis (47) et est destinée à parachever l'implantation des graines (58) dans le sol.

Finalement, différentes modifications restent possibles, notamment en ce qui concerne la constitution des divers éléments ou par substitution d'équivalents techniques, sans pour autant sortir du domaine de protection défini par les revendications.

## Revendications

1. Semoir pneumatique (5) comportant au moins un soc de semis (47) muni de trois orifices (56, 59, 61): un orifice d'entrée (56) par lequel arrive le flux d'air transportant les graines (58), un premier orifice de sortie (59) par lequel les graines (58) sont implantées dans le sol et un deuxième orifice de sortie (61), caractérisé en ce que le bouchage du premier orifice de sortie (59) entraîne la sortie des graines (58) par ledit deuxième orifice de sortie (61).

2. Semoir pneumatique selon la revendication 1, caractérisé en ce qu'en face de l'orifice d'entrée (56) est implanté un déflecteur (57) destiné à diriger le flux d'air et de graines (58) vers le bas en direction du premier orifice de sortie (59) et que le deuxième orifice de sortie (61) qui débouche à l'arrière compte tenu du sens d'avance (8) au travail, s'étend juste au-dessus du déflecteur (57) et légèrement plus haut que l'orifice d'entrée (56).

3. Semoir pneumatique selon la revendication 2, caractérisé en ce que le déflecteur (57) s'étend vers l'arrière et vers le bas.

4. Semoir pneumatique selon une ou plusieurs des revendications 1 à 3, caractérisé en ce que le soc de semis (47) comporte un corps (53) comprenant deux parois latérales (55) s'étendant vers l'arrière.

5. Semoir pneumatique selon la revendication 4 et la revendication 2 ou 3, caractérisé en ce que le déflecteur (57) est implanté entre les deux parois latérales (55) du corps (53) du soc de semis (47).

6. Semoir pneumatique selon la revendication 4 ou 5, caractérisé en ce qu'il comporte une conduite d'alimentation (46) liée à l'orifice d'entrée (56) du soc de semis (47) et que lesdites parois latérales (55) du corps (53) du soc de semis (47) sont éloignées l'une de l'autre d'une distance moyenne avoisinant le diamètre moyen (d) de la conduite d'alimentation (46) ou inférieure audit diamètre moyen (d).

7. Semoir pneumatique selon une ou plusieurs des revendications 1 à 6, caractérisé en ce que le soc de semis (47) comporte un sabot (52) destiné à tracer un sillon (54) dans le sol durant le travail.

8. Semoir pneumatique selon une ou plusieurs des revendications 1 à 7, caractérisé en ce que le deuxième orifice de sortie (61) comporte un organe de guidage (64) dirigeant le flux d'air et de graines (58) vers le bas et juste derrière le soc de semis (47).

9. Semoir pneumatique selon une ou plusieurs des revendications 1 à 8, caractérisé en ce que le soc de semis (47) comporte en sus un troisième orifice de sortie (62) permettant à une partie du flux d'air de s'échapper dudit soc de semis (47) lorsque le premier orifice de sortie (59) est obstrué.

10. Semoir pneumatique selon la revendication 9, caractérisé en ce que le troisième orifice de sortie (62) est implanté au-dessus de l'orifice d'entrée (56) et s'étend vers l'avant compte tenu du sens d'avance (8) au travail.

11. Machine agricole combinée de travail du sol et de semis (1) comportant une machine de préparation d'un lit de semence (4) et un semoir pneumatique (5), caractérisée en ce qu'elle utilise un semoir pneumatique (5) selon une ou plusieurs des revendications 1 à 10.

## Claims

1. Pneumatic seeder (5) including at least one drill coulter (47) equipped with three orifices (56, 59, 61): a inlet orifice (56) through which the flow of air conveying the seeds (58) enters, a first outlet orifice (59) via which the seeds (58) are plated in the ground, and a second outlet orifice (61), ***characterized in that*** plugging the first outlet orifice (59) causes the seeds (58) to exit via the second outlet orifice (61).

2. Pneumatic seeder according to Claim 1, ***characterized in that*** situated facing the inlet orifice (56) is a deflector (57) intended to direct the flow of air and of seeds (58) downwards towards the first outlet orifice (59) and that the second outlet orifice (61), which emerges behind when considering the direction of travel (8) in work, extends just above the deflector (57) and slightly higher up than the inlet orifice (56).

3. Pneumatic seeder according to Claim 2, ***characterized in that*** the deflector (57) extends backwards and downwards.

4. Pneumatic seeder according to one or more of Claims 1 to 3, ***characterized in that*** the drill coulter (47) has a body (53) comprising two rearwardly extending side walls (55).

5. Pneumatic seeder according to Claim 4 and Claim 2 or 3, ***characterized in that*** the deflector (57) is fitted between the two side walls (55) of the body (53) of the drill coulter (47).

6. Pneumatic seeder according to Claim 4 or 5, ***characterized in that*** it has a feed pipe (46) connected to the inlet orifice (56) of the drill coulter (47) and that the said side walls (55) of the body (53) of the drill coulter (47) are separated from one another by an average distance which is close to the average diameter (d) of the feed pipe (46) or smaller than the said average diameter (d).

7. Pneumatic seeder according to one or more of Claims 1 to 6, ***characterized in that*** the drill coulter (47) has a shoe (52) intended to mark a furrow (54) in the ground during work.

8. Pneumatic seeder according to one or more of Claims 1 to 7, ***characterized in that*** the second outlet orifice (61) has a guide member (64) directing the flow of air and of seeds (58) downwards just behind the drill coulter (47).

9. Pneumatic seeder according to one or more of Claims 1 to 8, ***characterized in that*** the drill coulter (47) additionally has a third outlet orifice (62) allowing some of the flow of air to escape from the said drill coulter (47) when the first outlet orifice (59) is obstructed.

10. Pneumatic seeder according to Claim 9, ***characterized in that*** the third outlet orifice (62) is situated above the inlet orifice (56) and extends forwards when considering the direction of travel (8) during work.

11. Combined agricultural implement for working the ground and for sowing (1) having an implement for preparing a seed bed (4) and a pneumatic seeder (5), ***characterized in that*** it employs a pneumatic seeder (5) according to one or more of Claims 1 to 10.

## Patentansprüche

1. Pneumatische Sämaschine (5) mit mindestens einer Drillschar (47), die mit drei Öffnungen (56, 59, 61) versehen ist: einer Eingangsöffnung (56), durch die der die Samen (58) transportierende Luftstrom eintritt, einer ersten Ausgangsöffnung (59), durch die die Samen (58) in den Boden eingebracht werden, und einer zweiten Ausgangsöffnung (61), ***dadurch gekennzeichnet*****, *daß*** das Verschließen der ersten Ausgagsöffnung (59) den Austritt der Samen (58) aus der zweiten Ausgangsöffnung (61) zur Folge hat.

2. Pneumatische Sämaschine nach Anspruch 1, ***dadurch gekennzeichnet, daß*** gegenüber der Eingangsöffnung (56) eine Ablenkvorrichtung (57) angebracht ist, die den Luft- und Samenstrom nach unten in Richtung der ersten Ausgangsöffnung (59) lenken soll, und daß sich die zweite Ausgangsöffnung (61), die bezüglich der Fahrtrichtung (8) im Betrieb nach hinten mündet, knapp über der Ablenkvorrichtung (57) und etwas höher als die Eingangsöffnung (56) erstreckt.

3. Pneumatische Sämaschine nach Anspruch 2, ***dadurch gekennzeichnet, daß*** sich die Ablenkvorrichtung (57) nach hinten und nach unten erstreckt.

4. Pneumatische Sämaschine nach einem oder mehreren der Ansprüche 1 bis 3, ***dadurch gekennzeichnet, daß*** die Drillschar (47) einen Körper (53) aufweist, der zwei sich nach hinten erstreckende Seitenwände (55) umfaßt.

5. Pneumatische Sämaschine nach Anspruch 4 und Anspruch 2 oder 3, ***dadurch gekennzeichnet, daß*** die Ablenkvorrichtung (57) zwischen den beiden Seitenwänden (55) des Körpers (53) der Drillschar (47) angebracht ist.

6. Pneumatische Sämaschine nach Anspruch 4 oder 5, ***dadurch gekennzeichnet, daß*** sie eine mit der Eingangsöffnung (56) der Drillschar (47) verbundene Versorgungsleitung (46) enthält und daß die Seitenwände (55) des Körpers (53) der Drillschar (47) in einem durchschnittlichen Abstand voneinander angeordnet sind, der dem durchschnittlichen Durchmesser (d) der Versorgungsleitung (46) nahekommt oder darunter liegt.

7. Pneumatische Sämaschine nach einem oder mehreren der Ansprüche 1 bis 6, ***dadurch gekennzeichnet, daß*** die Drillschar (47) einen Schuh (52) enthält, der dazu bestimmt ist, im Betrieb eine Furche (54) in den Boden zu ziehen.

8. Pneumatische Sämaschine nach einem oder mehreren der Ansprüche 1 bis 7, ***dadurch gekennzeichnet, daß*** die zweite Ausgangsöffnung (61) ein Führungsglied (64) aufweist, das den Luft- und Samenstrom nach unten und knapp hinter die Drillschar (47) leitet.

9. Pneumatische Sämaschine nach einem oder mehreren der Ansprüche 1 bis 8, ***dadurch gekennzeichnet, daß*** die Drillschar (47) darüber hinaus eine dritte Ausgangsöffnung (62) enthält, die gestattet, daß ein Teil des Luftstroms aus der Drillschar (47) ausströmt, wenn die erste Ausgangsöffnung (59) versperrt ist.

10. Pneumatische Sämaschine nach Anspruch 9, ***dadurch gekennzeichnet, daß*** die dritte Ausgangsöffnung (62) über der Eingangsöffnung (56) angeordnet ist und sich bezüglich der Fahrtrichtung (8) im Betrieb nach vorne erstreckt.

11. Kombinierte Landmaschine zur Bodenbearbeitung und zum Säen (1), die eine Maschine zur Vorbereitung eines Saatbettes (4) und eine pneumatische Sämaschine (5) aufweist, ***dadurch gekennzeichnet, daß*** sie eine pneumatische Sämaschine (5) nach einem oder mehreren der Ansprüche 1 bis 10 verwendet.
